# EUROPEAN PATENT SPECIFICATION

(11) **EP 2 130 663 B1**
(45) Date of publication and mention of the grant of the patent: **14.08.2013**
(21) Application number: 08425398.8
(22) Date of filing: 05.06.2008
(51) Int. Cl.: B29C 51/26, B29C 51/08, B29C 33/12, B29C 33/30

(54) **Thermoforming machine with an adjustable cover frame**
Thermoformmaschine mit einem einstellbaren Abdeckrahmen
Machine de thermoformage comprenant un cadre de capot réglable

(43) Date of publication of application: 09.12.2009
(73) Proprietor: Parco S.r.L., 10040 San Gillio (Torino) (IT)
(72) Inventor: Dal Cero Pasqualino, 10040 Givoletto (IT); Di Dio Leonardo, 10124 Torino (IT)
(74) Representative: Rondano, Davide

(56) References cited:
- EP-A- 1 876 011
- AT-B- 223 371
- DE-A1- 2 427 311
- DE-C1- 19 941 065
- GB-A- 1 467 425
- US-A1- 2002 079 611

## Description

This invention relates to a thermoforming machine comprising an adjustable cover frame.

according to the preamble of the attached Claim 1. .

A characteristic aspect of thermoforming machines is their ability to accommodate, inside the structure of the machine itself, moulds of variable dimensions in a range of predetermined sizes. The dimensions of the moulds are proportionally correlated to those of the parts to be produced, in other words they are correlated to the size of the product to be manufactured by the thermoforming process.

Generally speaking, the batches produced by this technology is not large because thermoforming is a process suitable for medium or small batches, and therefore requires the replacement of moulds with some frequency.

Consequently the replacement of the mould requires reconfiguring the machine, the thermoforming box of which is necessarily designed to be suitable for accommodating the largest mould that will be used in that machine. One of the main steps in this reconfiguration is adapting the room present in the thermoforming box to the actual dimensions of the mould intended to be used to make the product.

In this step, a cover frame having an inner window is usually fitted to the top of the thermoforming box. The cover frame is thus superimposed on the opening of the box, so that the inner window is able to accommodate the mould onto which the sheet of plastic material, to which the thermoforming process will be applied, must be positioned. The sheet is selected to have a dimension such as to reproduce the shape of the product which is to be thermoformed, bearing in mind the addition of a region around the outer edge which will be subsequently removed. The outer region of the sheet has the function of acting as a contact surface, ensuring airtightness during the thermo forming process.

This step in the reconfiguration of a conventional thermoforming machine is therefore highly complex and difficult, being time consuming and demanding accurate work. In addition, this operation requires replacing the cover frame whenever the mould which is to be used in the thermoforming process is changed, and this happens somewhat frequently because production batches are medium or small runs.

In this industry there is thus the need to provide cover frames which can be adjusted to suit the mould, without having to replace the frame. Also very important is the handling of this type of cover frame, which must be inexpensive and simple to carry out, while at the same time providing the air-tightness necessary for the thermo forming process.

Generally speaking, adjustable cover frames of known type use a plurality of plates which are connected in such a way that they can slide relative to each other by attachment systems which also act as guides and are essentially mechanical in nature (for example they use connections defined by shape such as dovetail or mortise and tenon type attachments), which connect these plates permanently together. To produce these guided attachment systems requires machining of high accuracy and some technical difficulty.

One example of this type of cover frame is given in document EP 0 692 365.

Adjustable cover frames of the type indicated above exhibit numerous drawbacks, due in particular to the type of guided attachment systems which are used to connect the edges of the adjustment plates.

One drawback is that these guided attachment systems require special maintenance due to the friction generated between the plates as they move: thus, these systems require the presence of lubrication devices for the mating sliding surfaces of the plates to facilitate their relative movement. The use of lubrication devices introduces the presence of gaps or voids between the mating edges of the adjacent plates and can significantly compromise air-tightness during the thermoforming process. To obviate this problem, seals are interposed between the mating sliding surfaces, but they have special geometrical shapes which are complicated to produce. In any case, the friction that occurs in these types of guided attachment, especially in the case of dovetail or mortise and tenon type attachments, causes pronounced wear of the seals, thereby reducing their useful life.

In addition, dovetail and similar shape-based attachments have the drawback of using hollow and solid regions to provide conjoined sliding surfaces between the plates. These hollow regions provide a receptacle for dirt and scrap, which can cause problems in the normal operation of the thermoforming frame.

GB-A-1467425 discloses a thermoforming machine according to the preamble of independent Claim 1. The thermoforming machine known from this document is provided with a cover frame having four movable elements which define a quadrilateral window, wherein an end of each movable element is slidably guided in a groove of the adjacent movable element so as to allow to adjust the dimensions of the window. This known thermoforming machine is also provided with locking means arranged to lock the movable elements in position.

It is an object of the present invention to provide a thermoforming machine capable of solving this and other drawbacks of the prior art, and having a cover frame which at the same time can be produced simply and inexpensively.

These and other objects are achieved in accordance with the present invention by means of a thermoforming machine according to Claim 1.

Other features and advantages of the invention will be made clear by the following detailed description, given purely by way of non-restrictive example, with reference to the accompanying drawings, in which:
- figure 1 is a perspective view of a first embodiment of a cover frame for a thermoforming machine according to the present invention;
- figure 2 is a schematic cross section through the thermoforming machine comprising the cover frame shown in figure 1;
- figure 3 is a top plan view of the same cover frame as in the previous figures, shown in a first adjustment configuration during a first operating step;
- figure 3a is a top plan view of the same cover frame as in the previous figures, shown in a first adjustment configuration during a second operating step;
- figure 4 is a top plan view of the same cover frame as in the previous figures, shown in a second adjustment configuration during a third operating step;
- figure 4a is a top plan view of the same cover frame as in the previous figures, shown in a second adjustment configuration during a fourth operating step;
- figure 5 is a cross section taken on V-V as marked in figure 3;
- figure 5a is a view similar to figure 5 but which features adjacent plates of the cover frame in a disconnected condition;
- figure 6 is a view similar to figure 5 but showing a detail of an embodiment of a cover frame for a thermoforming machine, not forming part of the present invention;
- figure 7 is a partial three-dimensional view of details of embodiment of a plate for the cover frame for a thermoforming machine according to the present invention; and
- figure 8 is a view in transverse section showing details of the same embodiment as in figure 7.

In relation to the following detailed description, use is made of the terms "transverse", "longitudinal", "top", "bottom" and "upper" and the like to define different directions of components. It will be understood that these directions refer to the position of the equipment when in use, to describe the relationships between the components of the embodiments described. This should not be taken to limit the scope of the present invention.

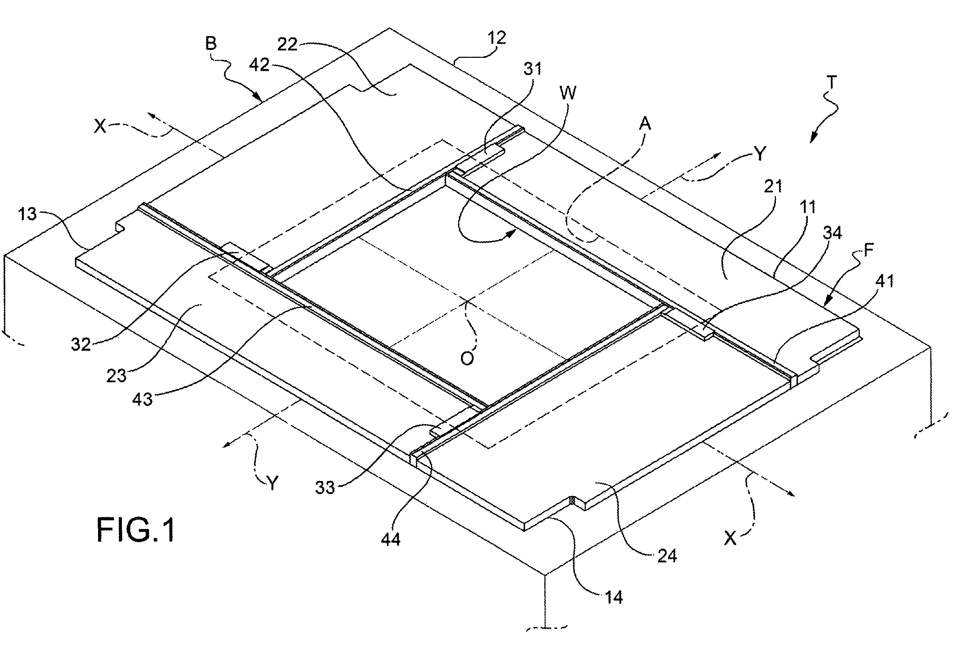

With particular reference to figure 1, reference F indicates an illustrative embodiment of an adjustable cover frame for a thermoforming machine T.

The cover frame F comprises four moveable elements or plates 11, 12, 13 and 14 that form an essentially rectangular annular arrangement, in which:
- the first plate 11 is shown before and adjacent to the second plate 12,
- the second plate 12 is shown before and adjacent to the third plate 13,
- the third plate 13 is shown before and adjacent to the fourth plate 14, and
- the fourth plate 14 is shown before and adjacent to the first plate 11.

Each of these plates 11, 12, 13, 14 has its own main body 21, 22, 23, 24 of advantageously essentially parallelepiped shape. The main bodies 21, 22, 23 and 24 of the plates 11, 12, 13 and 14 are made advantageously in aluminium or light aluminium alloys.

Moreover, each of these plates 11, 12, 13, 14 has a respective transverse edge portion 31, 32, 33, 34 located on a short side of the perimeter of the main body 21, 22, 23, 24, and a respective longitudinal edge portion 41, 42, 43, 44 situated on a long side of the perimeter of this main body 21, 22, 23, 24.

The transverse edge portions 31, 32, 33, 34 and the longitudinal edge portions 41, 42, 43, 44 project upwards in the same direction relative to the plane defined by the respective main bodies 21, 22, 23, 24.

As can be seen in figure 1, the respective transverse edge portion 31, 32, 33, 34 of each of the plates 11, 12, 13, 14 is adjacent to the respective longitudinal edge portion 42, 43, 44, 41 of the next plate 12, 13, 14, 11.

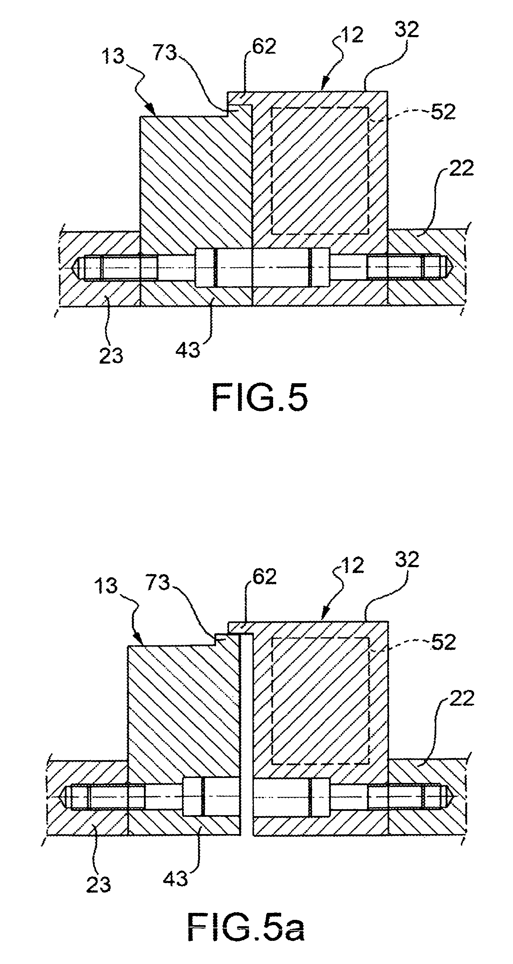

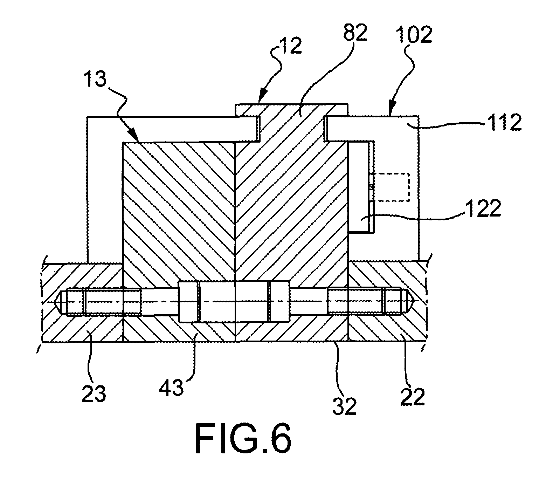

Preferably, the transverse edge portions 31, 32, 33, 34 and the longitudinal edge portions 41, 42, 43, 44 are preferably respectively separate parallelepiped units connected in a stable manner to the respective main bodies 21, 22, 23, 24, for example by screws as visible in figures 5, 5a and 6.

As is visible in figure 1, the longitudinal edge portions 41, 42, 43, 44 are located in the inward perimeter region of the rectangular ring formed by the plates 11, 12, 13, 14 and define an inner window W of adjustable dimensions.

Figure 5 shows advantageous features of the transverse edge portion 32 and of the longitudinal edge portion 43. Clearly, these features are also reproduced in the other transverse edge portions 31, 33, 34 and in the other longitudinal edge portions 41, 42, 44. More specifically, the transverse edge portion 32 and the longitudinal edge portion 43 comprise a lateral overhang 62 and a raised margin 73, respectively. The lateral overhang 62 and the raised margin 73 run the entire length of the transverse edge portion 32 and the entire length of the longitudinal edge portion 43, respectively. Additionally, the lateral overhang 62 is intended to be located above the raised margin 73. As will be described below, this arrangement means that the transverse edge portions 31, 32, 33, 34 are guided as they slide along the top of the subsequent adjacent longitudinal edge portions 42, 43, 44, 41. With this arrangement, the contact area between these edge portions is reduced, thereby reducing the friction generated during the movement of the plates 11, 12, 13, 14. Naturally, as an alternative, the lateral overhang could be on the longitudinal edge portion 43, while the raised margin could be on the transverse edge portion 32.

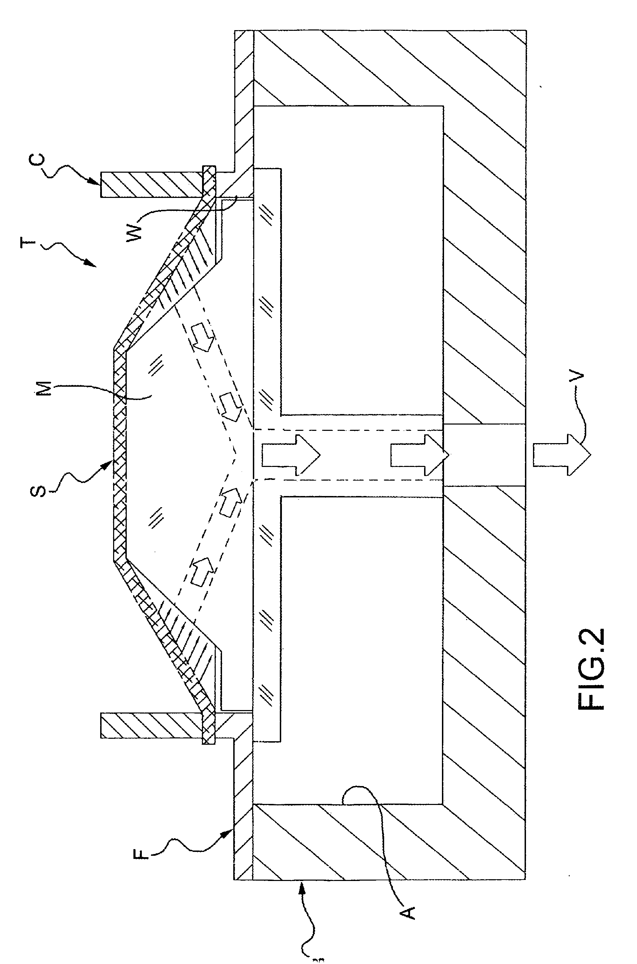

Referring particularly to figures 1 and 2, the cover frame F is designed to be mounted on the thermoforming box B of a thermoforming machine T. The thermoforming box B has an upward opening A and the plates 11, 12, 13, 14 are designed to at least partly cover the abovementioned opening A.

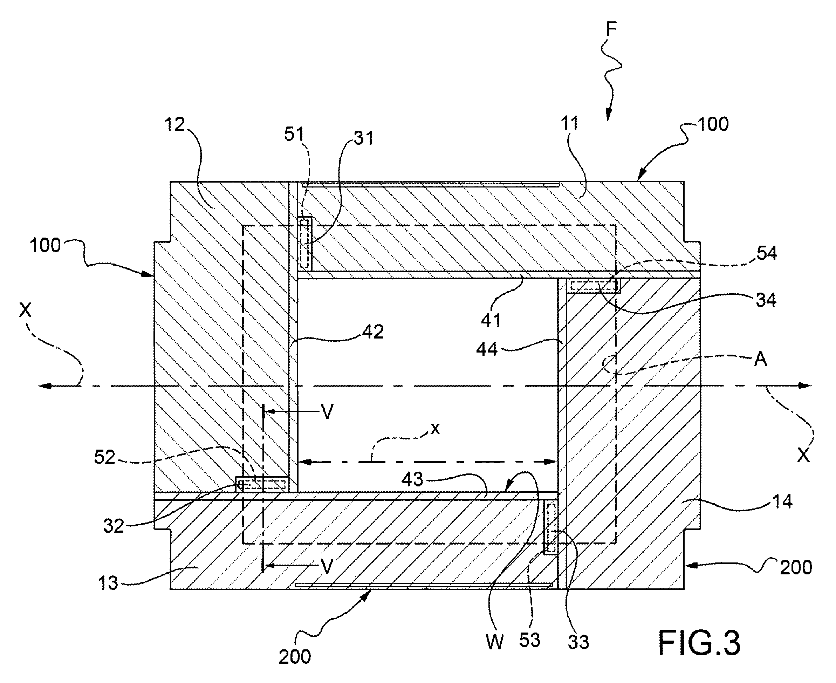

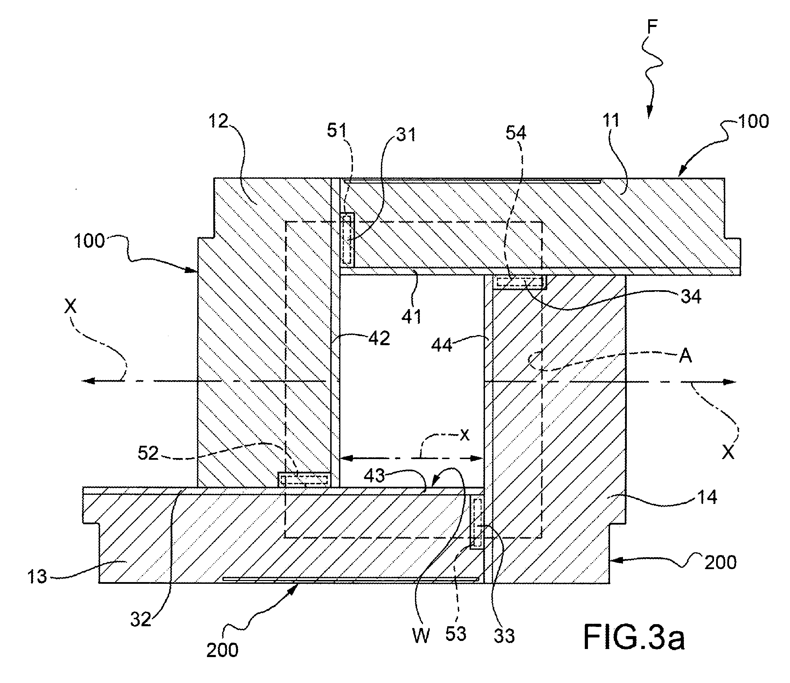

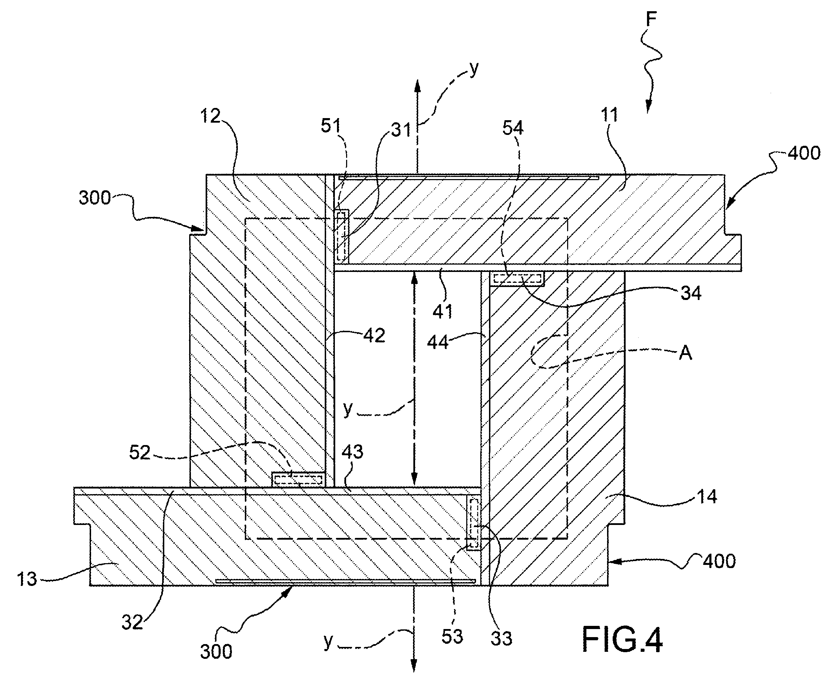

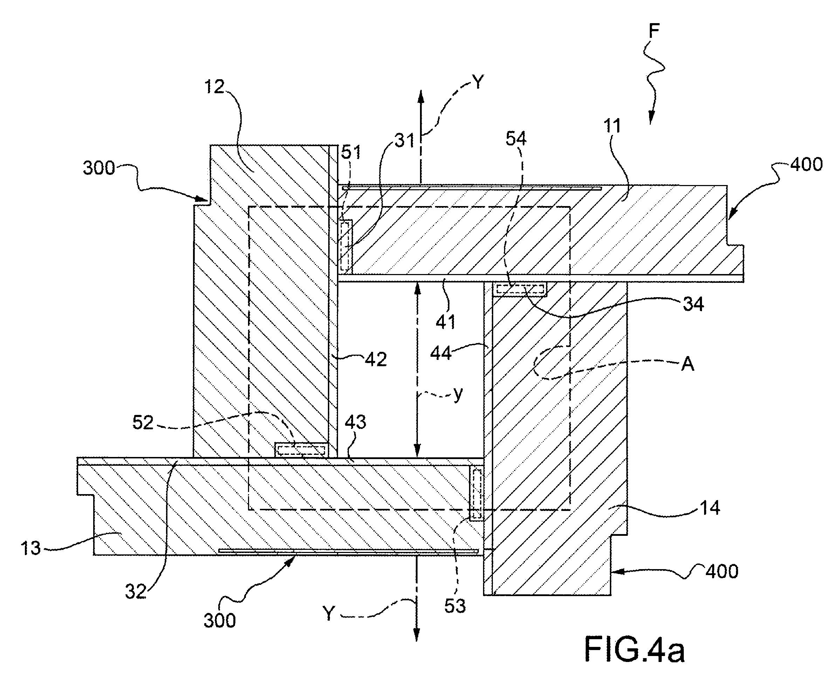

Each longitudinal edge portion 41, 42, 43, 44 is preferably made of a magnetizable ferromagnetic material. Each transverse edge portion 31, 32, 33, 34 encloses a respective electromagnetic device indicated schematically as a whole by the broken lines 51, 52, 53 and 54 (figures 3 and 4).

Each electromagnetic device 51, 52, 53 and 54 comprises a respective permanent magnet (not shown) which normally magnetizes the longitudinal edge portions 41, 42, 43, 44. In this way, when the electromagnetic devices 51, 52, 53 and 54 are de-energized, they attract the ferromagnetic material of the subsequent adjacent longitudinal edge portions 42, 43, 44, 41. This condition is illustrated by the transverse edge portion 32 and the longitudinal edge portion 42 in figure 5. An alternative method is to use a known type of electromagnet as an electromagnetic device: when energized by electric current this attracts and locks together the adjacent transverse and longitudinal edge portions. In this method, when the electromagnet is de-energized, the adjacent plates are not attracted or locked.

Consequently the longitudinal edge portions 42, 43, 44, 41 are held against the respective transverse edge portions 31, 32, 33, 34 in an attracted condition. The above arrangement is referred to in the description as the "locked configuration", in which all the plates 11, 12, 13, 14 are held together. In this locked configuration the centre of the plates 11, 12, 13, 14, marked O (see figure 1) can be aligned with the centre (not shown) of the opening A of the box B by an operator. Additionally, the locked configuration prevents unwanted variations in the dimensions of the window W, because all the plates 11, 12, 13, 14 form a single monolithic whole.

Each electromagnetic device 51, 52, 53, 54 comprises its own solenoid (also not shown) which is designed to be energized selectively by an electric current to generate a magnetic field which opposes the magnetic field of the associated permanent magnet (not shown) contained in the corresponding transverse edge portion 31, 32, 33, 34. Hence, when the solenoids are energized, they cancel out the magnetic force of attraction of the permanent magnet, thereby releasing the corresponding transverse edge portion 31, 32, 33, 34 of the subsequent adjacent longitudinal edge portion 42, 43, 44, 41.

A preferred form of operation of the cover frame F will now be described.

In an initial condition, when the thermoforming machine T is disabled and not running, the cover frame F is in the locked configuration described above.

The cover frame F is initially placed in a first adjustment configuration.

In the first adjustment configuration, the second and fourth electromagnetic devices 52, 54 are energized and release the third and first longitudinal edge portions 43, 41, respectively, from the second and fourth transverse edge portions 32, 34. The first and third electromagnetic devices 51, 53 meanwhile remain de-energized.

In this way the first and second plates 11, 12 remain magnetically attracted, forming a first L-shaped conjoined unit 100. Similarly, the third and fourth plates 13, 14 also remain magnetically attracted, forming a second L-shaped conjoined unit 200. The fourth and first plates 14, 11 are not attracted to each other, nor are the second and third plates 12, 13.

As can be seen in figure 5a, in this first adjustment configuration there is a separation of the frame in the first and second units 100, 200 due to a slight parting of the second and fourth transverse edge portions 32, 34 from the third and first longitudinal edge portions 43, 41 resulting from the interruption of the magnetic attraction. The first and second units 100, 200 can then be shifted relative to each other in a first direction of adjustment X-X approximately parallel to the second and fourth transverse edge portions 32, 34 to adjust a first dimension x of the window W.

After having reached the desired dimension x shown in figure 3a, the second and fourth electromagnetic devices 52, 54 are de-energized and the plates 11, 12, 13, 14 return to the locked configuration.

Unlike the prior art, this minimizes the contact area between the transverse edge portions 32, 34 and the associated longitudinal edge portions 43, 41 and, during the movement in the X-X direction, they are not necessarily in contact with each other. This arrangement reduces friction and the need for lubrication.

The cover frame F is then changed from the locked configuration to a second adjustment configuration.

In the second adjustment configuration, with particular reference to figure 4, the first and third electromagnetic devices 51, 53 are energized and release the second and fourth longitudinal edge portions 42, 44 from the first and third transverse edge portions 31, 33, respectively. The second and fourth electromagnetic devices 52, 54, which had been energized in the first adjustment configuration, this time remain de-energized.

In this way the second and third plates 12, 13 remain magnetically attracted, forming a third L-shaped conjoined unit 300. Similarly, the fourth and first plates 14, 11 also remain magnetically attracted, forming a fourth L-shaped conjoined unit 400. The first and second plates 11, 12 are no longer attracted to each other, nor are the third and fourth plates 13, 14.

In much the same way as was described in respect of the first adjustment configuration, the third and fourth units 300, 400 move away from each other, because the first and third transverse edge portions 31, 33 separate from the second and fourth longitudinal edge portions 42, 44 due to the absence of magnetic attraction. The third and fourth units 300, 400 can then be shifted relative to each other in a second direction of adjustment Y-Y parallel to the first and third transverse edge portions 31, 33, thereby adjusting a second dimension y of the window W, orthogonal to the first dimension x.

After having reached the desired dimension y shown in figure 4, the first and third electromagnetic devices 51, 53 are de-energized and the plates 11, 12, 13, 14 returned to the locked configuration.

In the second adjustment configuration, again, the contact areas between the third and fourth units 300, 400 are minimized, avoiding friction and wear.

Once the first and second dimensions x, y of the window W have been adjusted, the adjacent plates 11, 12, 13, 14 in the locked configuration can easily be aligned with the centre of the opening A of the box B by moving the entire frame C as a monolithic whole.

Moreover, because of the near-planarity of the contact areas between the transverse and the longitudinal edge portions 31, 32, 33, 34 and 41, 42, 43, 44, respectively, when the plates 11, 12, 13, 14 are attracted together, the air seal can be provided by mechanical means only, without the need to interpose variously profiled gaskets between the gaps present between the abovementioned plates.

The absence of a lubricating system also avoids the risk of the thermoformed product being "contaminated" by the lubricating substance.

Thus, as shown in figure 2, when a thermoforming machine T equipped with the cover frame F is to be configured, the window W can be adjusted by carrying out the first and second adjustment configurations of registration described above in such a way that the dimensions x, y are adapted to the dimensions of a mould M to be used. The window W is then aligned with the opening A by shifting the cover frame F (when in the locked configuration) and the thermoforming process can begin. A sheet of plastic material S, suitably preheated by suitable heating devices (not shown) is clamped between a clamp frame C and the cover frame F. In this situation sheet S is preferably blown first to make the surface with which this sheet S will be laid on the mould M, convex. In the subsequent steps the sheet S is applied against the mould M inside the thermoforming box B. In this condition, suitable pumping devices (not shown) generate a depression or vacuum in the direction indicated by the arrows V to "suck" the sheet S towards the opening A so that it clings to the surface of the mould M.

To ensure airtightness, the upper faces of the longitudinal edges 41, 42, 43, 44 of the plates 11, 12, 13, 14 are advantageously provided with seals of a type known per se (such as gaskets) which will seal the region between the clamp frame C, to which the sheet S is applied, and the cover frame F. These sealing elements are not described here as they are not the subject of the present invention.

In a variant of the mode of operation of the frame of plates F described above, it is also conceivable for the electromagnetic devices 51, 52, 53, 54 to adopt a plurality of different adjustment configurations, in which they alternately release a respective individual plate from the other plates, which remain attached to each other. In this way an individual released plate can be shifted, adjusting the position and dimension of one side of the inner window W. For example, suppose that only the first and fourth electromagnetic devices 51, 54 are energized: then the first plate 11 will be free to move relative to the other three plates 12, 13, 14 which remain joined together. The second and first electromagnetic devices 52, 51 can then be energized, and then it will be the second plate 12 to be released from the remaining group of plates 13, 14, 11 and so on.

In another variant of the mode of operation, the individual plates can initially all be released from each other and then shifted independently of each other into the desired arrangement. Once in position they can be returned to the locked configuration.

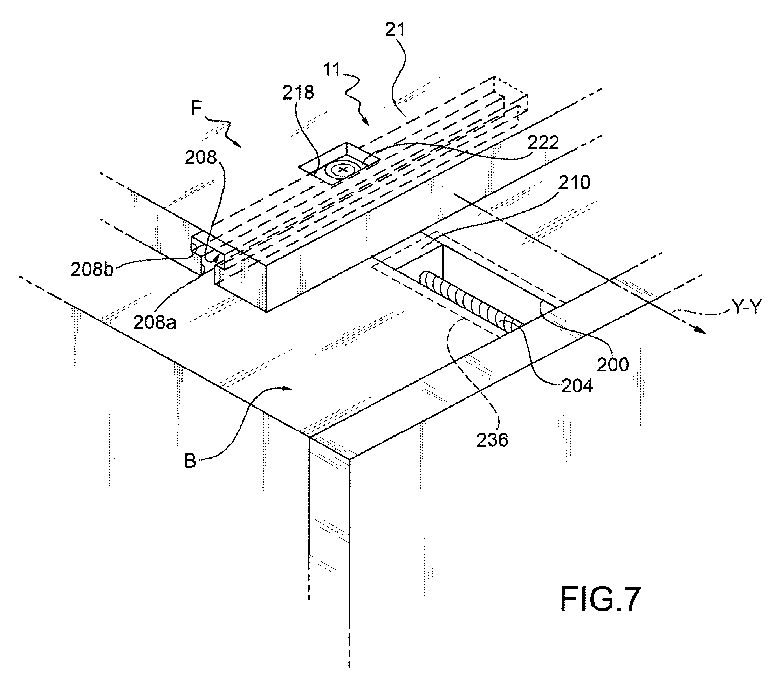

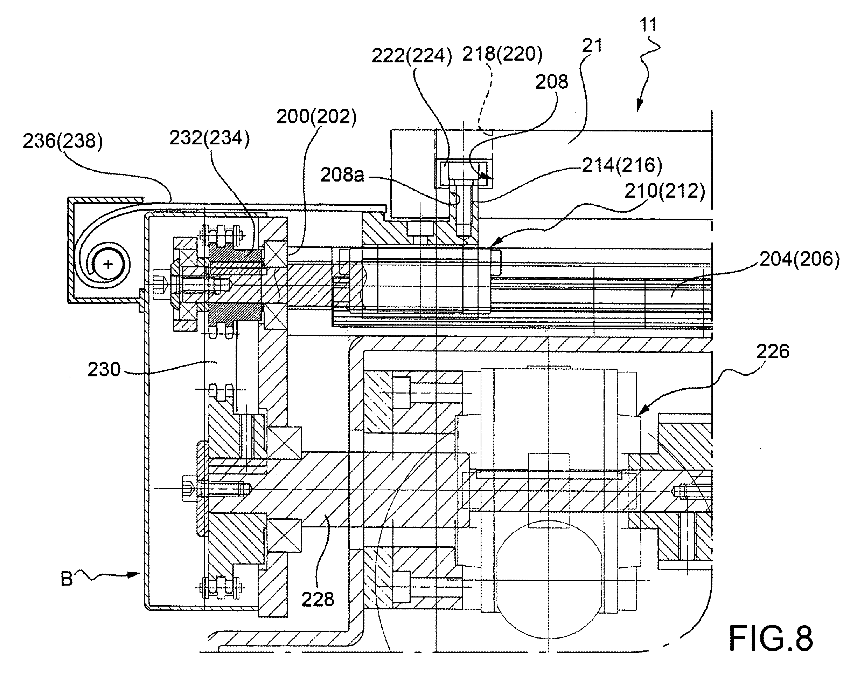

Referring to figures 7 and 8, a brief account will be given here of an example of a drive mechanism for the cover plates of the present invention. Figures 7 and 8 show the cover plate 11 resting on the thermoforming box B. As can be seen, the cover plate has a pair of channels 200, 202 along the top and oriented lengthwise in a direction perpendicular to the length of the cover plate 11. In this case, the channels 200, 202 are parallel to the Y-Y direction of registration.

The channels 200, 202 also accommodate a respective pair of externally threaded worms 204, 206 which rotate about their longitudinal axis when driven as will be described in detail later.

The main body 21 has a T-section longitudinal channel 208 running the full length of the cover plate 11.

As can be seen in figure 8, first and second internally threaded nut blocks 210, 212 ending in respective first and second upper projections 214, 216 are connected around the first and second worms 204, 206 by means of recirculating balls. The upper projections 214 and 216 are inserted into the narrow leg 208a of the longitudinal channel 208.

As can be gathered from figures 7 and 8, the top face of the main body 21 has first and second openings 218 and 220 located above the longitudinal channel 208 and communicating with its enlarged head 208b. In this way, when the frame F is being fitted to the thermoforming box B, the plate 11, is moved so that the first and second openings 218 and 220 are coaxial with the first and second upper projections 214 and 216. First and second plugs 222 and 224 are then inserted through the first and second openings 218 and 220, so that they rest on the first and second upper projections 214 and 216, and are then screwed down onto these. Consequently the first and second plugs 222 and 224 are fixed to the first and second blocks 210, 212. The transverse dimension of the first and second blocks 222 and 224 is advantageously greater than the transverse dimension of the first and second upper projections 214 and 216 respectively (and also of the narrow leg 208a of the longitudinal channel 208), but less than the transverse dimension of the enlarged head 208b of the longitudinal channel 208. The first and second plugs 222 and 224 thus bear on the respective shoulder surfaces formed by the enlarged head 208b. This gives the plate 11 an "anti-tip" function when moved. Another advantage of using the plugs 222 and 224 is that they improve the guided sliding movement of the plate 11 relative to the thermoforming box B.

As can be seen in figure 8, the thermoforming box B includes an electric motor 226 that turns a drive shaft 228, which meshes with a transmission chain 230 which in turn acts on first and second drive portions 232, 234 of the first and second worms 204, 206. Therefore, when an operator operates the electric motor 226 in either direction of rotation, the first and second worms 204 and 206 will, through the first and second blocks 210, 212, move the plate 11 in the Y-Y direction towards or away from the centre of the thermoforming box B.

With reference to figure 8, is should be stressed that, in order to protect the channels 200, 202 from dirt, dust and other powdery bodies, the thermoforming box B also includes first and second protective strips 236, 238 designed to cover the abovementioned channels 200, 202. The width of the protective strip 236 and 238 is equal to or greater than the width of the channels 200, 202. These first and second protective strips 236 and 238 are connected at respective first ends to the first and second block 210, 212 and at the opposite respective ends to the thermoforming box B by a winding device of a type known per se. In a variant of application (not shown) a single strip of sufficient dimensions to cover both channels 200 and 202 could be installed in place of a pair of strips 236 and 238.

It will be clear to those skilled in the art that this movement mechanism can also be adopted for the other cover plates 12, 13, 14 by reproducing what has been described above with reference to plate 11 and modifying as appropriate. The protective strips 236 and 238 prevent any unwanted material from being deposited in the channels 200, 202 and interfering with normal operation of the frame F.

Figure 6 shows an alternative embodiment of the locking system associated with the transverse edge portion 32. The features of this embodiment are of course also reproduced in the other transverse edge portions 31, 33, 34.

Details and elements that are similar or have analogous functions to those of the embodiment illustrated in the preceding figures are given the same alphanumeric references.

As can be seen, the electromagnetic device of the transverse edge portion 32 has been replaced with a mechanical locking device 102 shown in figure 6 in an attached and locked condition. This device 102 comprises a profile in the shape of an overturned U 112 which straddles the respective transverse edge portion 32 and the adjacent longitudinal edge portion 43.

In order to lock the adjacent plates 12, 13 securely, the profile 112 is connected to the transverse edge portion 32 by its head 82 which projects upward and is shaped like a T. The narrow neck of the head 82 is housed with play in a transverse direction relative to the plate 12.

The mechanical locking device 102 also includes elastic means (not shown) tending to push a piston 122 out against the transverse edge portion 32, pressing it against the adjacent longitudinal edge portion 43. This locks mechanically together the two adjacent plates 12 and 13, which are in the attached condition when the locking device 102 is de-energized.

Since the other transverse edge portions also have the same features as the edge portion 32, the frame F in this second embodiment is also normally in the locked configuration.

The mechanical locking device 102 also includes pneumatic actuating means of a type known per se (not shown) which, in response to an operator command, can be activated to return the piston 32 from the extended position to a retracted position (not shown). In this way the transverse edge portion 32 and the longitudinal edge portion 43 can be separated afterwards to allow relative sliding between the plates 12 and 13, as in the embodiment described earlier.

In the light of the above, the various adjustment configurations which the frame F can adopt in this alternative embodiment are analogous to those described with reference to the first embodiment.

The relative sliding movement between the plates 12 and 13 is advantageously guided by the profile 112 which straddles the transverse edge portion 32 and the succeeding adjacent longitudinal edge portion 43.

As will be clear to those skilled in the art from the teachings of this invention, the type of releasable attachment between the transverse and longitudinal edge portions of the plates can also be provided by using mechanical locking members to attach by hydraulic, electromechanical, electrical, piezoelectrical and such-like means besides those shown in the embodiments described and illustrated here.

As mentioned earlier in reference to the first embodiment, it is clearly also conceivable for the second embodiment to use, for the locking devices, a different, less preferred operation in which, when they are de-energized, they set the associated transverse and longitudinal edge portions in the unattached condition, in which case, when the locking devices are on, the associated transverse and longitudinal edge portions are set in the attached and locked condition.

## Claims

1. Thermoforming machine (T) comprising:
- a box (B) having an open top (A) and designed to support a mould (M);
- a mould (M) supported on the box (B);
- a fixing frame (C) suitable for holding a sheet (S) of thermoplastic material designed to be formed and positioned against the mould (M); and
- a cover frame (F) interposed between the open top (A) of the box (B) and the fixing frame (C);
wherein the cover frame (F) comprises a first, a second, a third and a fourth movable elements (11, 12, 13, 14) which are supported by the box (B) of a thermoforming machine (T) so as to at last partly cover the open top (A) of said box (B) and are designed to be attached in succession each one to its neighbour in a ring-like arrangement, thereby creating a quadrilateral window (W) whose dimensions are adjustable in such a way as to adapt to the dimensions of the mould (M) which is to be surrounded; and
wherein the cover frame (F) further comprises releasable locking means (51, 52, 53, 54) so arranged as to adopt a plurality of adjustment configurations in which they selectively release/attach each preceding movable element (11, 12, 13, 14) from/to the next movable element (12, 13, 14, 11) allowing said movable elements (11, 12, 13, 14) to move to adjust the dimensions of the window (W);
**characterized in that** said locking means (51, 52, 53, 54) comprise electromagnetic locking means that are selectively controllable to arrange said movable elements (11, 12, 13, 14) in said adjustment configurations.

2. Thermoforming machine according to Claim 1, wherein said locking means (51, 52, 53, 54) are designed to adopt a plurality of adjustment configurations, in each of which they alternatively detach one individual movable element (11; 12; 13; 14) from the plurality of other attached movable elements (12, 13, 14; 13, 14, 11; 14, 11, 12; 11, 12, 13), and wherein said one individual movable element (11; 12; 13; 14) is movable to adjust the dimensions of a corresponding side of the window (W).

3. Thermoforming machine according to Claim 1 or Claim 2, wherein said locking means (51, 52, 53, 54) are designed to adopt a locked configuration as well, in which each movable element (11, 12, 13, 14) is attached to the respective next adjacent movable element (12, 13, 14, 11) in such a way as to prevent an undesired variation of the dimensions of the window (W).

4. Thermoforming machine according to Claim 3, wherein said electromagnetic locking means comprise four electromagnetic locking devices (51, 52, 53, 54) fitted to the movable elements (11, 12, 13, 14) and designed to attach each the respective movable element (11, 12, 13, 14) to the next movable element (12, 13, 14, 11) by magnetization.

5. Thermoforming machine according to Claim 4, wherein each electromagnetic locking device (51, 52, 53, 54) is designed to be inactive when carrying an electric current, releasing the associated movable element (11, 12, 13, 14) from the next movable element (12, 13, 14, 11).

6. Thermoforming machine according to Claim 4, wherein each electromagnetic locking device (51, 52, 53, 54) is designed to be active when carrying an electric current, attaching the associated movable element (11, 12, 13, 14) to the next movable element (12, 13, 14, 11).

7. Thermoforming machine according to any of the preceding claims, wherein said locking means (51, 52, 53, 54) are designed to adopt a first adjustment configuration in which they attach:
- the preceding first movable element (11) to the next second movable element (12), forming a first unit (100); and
- the preceding third movable element (13) to the next fourth movable element (14), forming a second unit (200);
said first adjustment configuration defining a first direction of adjustment (X-X) in which said first and second units (100, 200) are movable relative to each other, thereby adjusting a first dimension (x) of the window (W).

8. Thermoforming machine according to Claim 7, wherein said locking means (51, 52, 53, 54) are designed to adopt a second adjustment configuration in which they attach:
- the preceding fourth movable element (14) to the next first movable element (11), forming a third unit (300); and
- the preceding second movable element (12) to the third movable element (13), forming a fourth unit (400);
said second adjustment configuration defining a second direction of adjustment (Y-Y) in which said third and fourth units (300, 400) are movable relative to each other, thereby adjusting a second dimension (y) of the window (W).

9. Thermoforming machine according to Claim 8, wherein the first direction of adjustment (x) is orthogonal to the second direction of adjustment (y).

10. Thermoforming machine according to any of the preceding claims, wherein each movable element (11, 12, 13, 14) comprises:
- a transverse edge portion (31, 32, 33, 34) at which the respective movable element (11, 12, 13, 14) is designed to be both adjacent to and attached to the next movable element (12, 13, 14, 11); and
- a longitudinal edge portion (41, 42, 43, 44) through which the transverse edge portion (31, 32, 33, 34) of the preceding movable element (14, 11, 12, 13) is designed to be adjacent and attached, the longitudinal edge portions (41, 42, 43, 44) defining the window (W).

11. Thermoforming machine according to Claim 10, wherein the electromagnetic devices (51, 52, 53, 54) are located at the transverse edge portions (31, 32, 33, 34) of the respective movable elements (11, 12, 13, 14).

12. Thermoforming machine according to Claim 11, wherein the longitudinal edge portions (41, 42, 43, 44) are made of a ferromagnetic material which is magnetizable by the electromagnetic locking devices (51, 52, 53, 54).

13. Thermoforming machine according to any one of the preceding claims, further comprising guide means (62, 73; 222, 224) suitable for allowing guided sliding of the movable elements (11, 12, 13, 14).

14. Thermoforming machine according to any one of the preceding claims, further comprising drive means (200, 202, 210, 212, 226, 228, 230, 232, 234) for moving the movable elements (11, 12, 13, 14) relative to the thermoforming box (B).

## Patentansprüche

1. Thermoformmaschine (T) umfassend:
- einen Kasten (B), der eine offene Oberseite (A) aufweist und zum Tragen eines Formwerkzeugs (M) ausgestaltet ist;
- ein Formwerkzeug (M), das an dem Kasten (B) getragen ist;
- einen Befestigungsrahmen (C), der zum Halten einer Schicht (S) aus thermoplastischem Material geeignet ist, das zur Formung und Anordnung gegen das Formwerkzeug (M) ausgestaltet ist; und
- einen Abdeckrahmen (F), der zwischen der offenen Oberseite (A) des Kastens (B) und dem Befestigungsrahmen (C) angeordnet ist;
wobei der Abdeckrahmen (F) ein erstes, ein zweites, ein drittes und ein viertes bewegliches Element (11, 12, 13, 14) aufweist, die an dem Kasten (B) einer Thermoformmaschine (T) so gelagert sind, dass sie die offene Oberseite (A) des Kastens (B) zumindest teilweise bedecken, und ausgestaltet sind, um einander benachbart aufeinanderfolgend mit einer ringartigen Anordnung angebracht zu werden, um hierdurch ein vierseitiges Fenster (W) zu erzeugen, dessen Dimensionen derart einstellbar sind, dass sie an die Dimensionen des zu umgebenden Formwerkzeugs (M) angepasst sind; und
worin der Abdeckrahmen (F) lösbare Arretiermittel (51, 52, 53, 54) aufweist, die so angeordnet sind, dass sie eine Mehrzahl von Einstellkonfigurationen einnehmen, in denen sie selektiv jedes vorangehende bewegliche Element (11, 12, 13, 14) von/an dem nächsten beweglichen Element (12, 13, 14, 11) lösen/anbringen, um eine Bewegung der beweglichen Elemente (11, 12, 13, 14) zum Einstellen der Dimension des Fensters (W) zu erlauben;
**dadurch gekennzeichnet, dass** die Arretiermittel (51, 52, 53, 54) elektromagnetische Arretiermittel aufweisen, die selektiv ansteuerbar sind, um die beweglichen Elemente (11, 12, 13, 14) in den Einstellkonfigurationen anzuordnen.

2. Thermoformmaschine nach Anspruch 1, worin die Arretiermittel (51, 52, 53, 54) ausgestaltet sind, um eine Mehrzahl von Einstellkonfigurationen einzunehmen, in deren jeder sie abwechselnd ein einzelnes Element (11; 12; 13; 14) von der Mehrzahl der anderen angebrachten beweglichen Elemente (12, 13, 14; 13, 14, 11; 14, 11, 12; 11, 12, 13) lösen, und worin das eine einzelne bewegliche Element (11; 12; 13; 14) beweglich ist, um die Dimensionen einer entsprechenden Seite des Fensters (W) einzustellen.

3. Thermoformmaschine nach Anspruch 1 oder Anspruch 2, worin die Arretiermittel (51, 52, 53, 54) ausgestaltet sind, um auch eine arretierte Konfiguration einzunehmen, worin jedes bewegliche Element (11, 12, 13, 14) an dem jeweiligen nächsten benachbarten beweglichen Element (12, 13, 14, 11) derart angebracht ist, dass eine ungewünschte Veränderung der Dimensionen des Fensters (W) verhindert wird.

4. Thermoformmaschine nach Anspruch 3, worin die elektromagnetischen Arretiermittel vier elektromagnetische Arretiervorrichtungen (51, 52, 53, 54) aufweisen, die an den beweglichen Elementen (11, 12, 13, 14) sitzen, und ausgestaltet sind, um jedes jeweilige bewegliche Element (11, 12, 13, 14) durch agnetisierung an dem nächsten beweglichen Element (12, 13, 14, 11) anzubringen.

5. Thermoformmaschine nach Anspruch 4, worin jede elektromagnetische Arretiervorrichtung (51, 52, 53, 54) so ausgestaltet ist, dass sie inaktiv ist, wenn sie elektrischen Strom führt, wobei das zugeordnete bewegliche Element (11, 12, 13, 14) von dem nächsten beweglichen Element (12, 13, 14, 11) gelöst wird.

6. Thermoformmaschine nach Anspruch 4, worin jede elektromagnetische Arretiervorrichtung (51, 52, 53, 54) so ausgestaltet ist, dass sie aktiv ist, wenn sie elektrischen Strom führt, wobei das zugeordnete bewegliche Element (11, 12, 13, 14) an dem nächsten beweglichen Element (12, 13, 14, 11) angebracht wird.

7. Thermoformmaschine nach einem der vorhergehenden Ansprüche, worin die Arretiermittel (51, 52, 53, 54) so ausgestaltet sind, dass sie eine Feineinstellungskonfiguration einnehmen, worin sie anbringen:
- das vorangehende erste bewegliche Element (11) an dem nächsten zweiten beweglichen Element (12) unter Bildung einer ersten Einheit (100); und
- das vorangehende dritte bewegliche Element (13) an dem nächsten vierten beweglichen Element (14) unter Bildung einer zweiten Einheit (200);
- wobei die erste Einstellkonfiguration eine erste Einstellrichtung (X-X) definiert, in der die ersten und zweiten Einheiten (100, 200) relativ zueinander beweglich sind, um hierdurch eine erste Dimension (x) des Fensters (W) einzustellen.

8. Thermoformmaschine nach Anspruch 7, worin die Arretiermittel (51, 52, 53, 54) so ausgestaltet sind, dass sie eine zweite Einstellkonfiguration einnehmen, worin sie anbringen:
- das vorangehende vierte bewegliche Element (14) an dem nächsten ersten beweglichen Element (11) unter Bildung einer dritten Einheit (300);
- das vorangehende zweite bewegliche Element (12) an dem dritten beweglichen Element (13) unter Bildung einer vierten Einheit (400); wobei die zweite Einstellkonfiguration eine zweite Einstellrichtung (Y-Y) definiert, in der die dritten und vierten Einheiten (300, 400) relativ zueinander beweglich sind, um hierdurch eine zweite Dimension (y) des Fensters (W) einzustellen.

9. Thermoformmaschine nach Anspruch 8, worin die erste Einstellrichtung (x) orthogonal zur zweiten Einstellrichtung (y) ist.

10. Thermoformmaschine nach einem der vorhergehenden Ansprüche, worin jedes bewegliche Element (11, 12, 13, 14) umfasst:
einen Querrandabschnitt (31, 32, 33, 34), an dem das jeweilige bewegliche Element (11, 12, 13, 14) so ausgestaltet ist, dass es dem nächsten beweglichen Element (12, 13, 14, 11) sowohl benachbart ist als auch daran angebracht ist; und
einen Längsrandabschnitt (41, 42, 43, 44), durch den der Querrandabschnitt (31, 32, 33, 34) des vorangehenden beweglichen Elements (14, 11, 12, 13) so ausgestaltet ist, dass er benachbart und daran angebracht ist, wobei die Längsrandabschnitte (41, 42, 43, 44) das Fenster (W) definieren.

11. Thermoformmaschine nach Anspruch 10, worin die elektromagnetischen Vorrichtungen (51, 52, 53, 54) an den Querrandabschnitten (31, 32, 33, 34) der jeweiligen beweglichen Elemente (11, 12, 13, 14) angeordnet sind.

12. Thermoformmaschine nach Anspruch 11, worin die Längsrandabschnitte (41, 42, 43, 44) aus thermomagnetischem Material hergestellt sind, das durch die elektromagnetischen Arretiervorrichtungen (51, 52, 53, 54) magnetisierbar ist.

13. Thermoformmaschine nach einem der vorhergehenden Ansprüche, die ferner Führungsmittel (62, 73; 222, 224) aufweist, die dazu geeignet sind, ein geführtes Gleiten der beweglichen Elemente (11, 12, 13, 14) zu erlauben.

14. Thermoformmaschine nach einem der vorhergehenden Ansprüche, die ferner Antriebsmittel (200, 202, 210, 212, 226, 228, 230, 232, 234) aufweist, um die beweglichen Elemente (11, 12, 13, 14) relativ zu dem Thermoformkasten (B) zu bewegen.

## Revendications

1. Machine de thermoformage (T) comprenant :
- une boîte (B) ayant une partie supérieure ouverte (A) et conçue pour supporter un moule (M) ;
- un moule (M) supporté par la boîte (B) ;
- un cadre de fixation (C) approprié pour tenir une feuille (S) de matériau thermoplastique conçue pour être formée et positionnée contre le moule (M) ;
- un cadre de couverture (F) intercalé entre la partie supérieure ouverte (A) de la boîte (B) et le cadre de fixation (C) ;
dans laquelle le cadre de couverture (F) comprend un premier, un deuxième, un troisième et un quatrième élément mobile (11, 12, 13, 14) qui sont supportés par la boîte (B) d'une machine de thermoformage (T) de manière à couvrir au moins partiellement la partie supérieure ouverte (A) de la boîte (B) et qui sont conçus pour être attachés les uns à la suite des autres, chacun avec son voisin, en un agencement annulaire, créant ainsi une fenêtre quadrilatérale (W) dont les dimensions sont réglables de façon à s'adapter aux dimensions du moule (M) qui doit être entouré ; et
dans laquelle le cadre de couverture (F) comprend en outre des moyens de verrouillage détachables (51, 52, 53, 54) agencés de manière à adopter une pluralité de configurations de réglage dans lesquelles ils détachent/attachent sélectivement l'élément mobile précédent (11, 12, 13, 14) de/à l'élément mobile suivant (12, 13, 14, 11) en permettant auxdits éléments mobiles (11, 12, 13, 14) de se déplacer pour ajuster les dimensions de la fenêtre (W) ;
**caractérisée en ce que** lesdits moyens de verrouillage (51, 52, 53, 54) comprennent des moyens de verrouillage électromagnétiques qui peuvent être commandés de façon sélective pour mettre lesdits éléments mobiles (11, 12, 13, 14) dans lesdites configurations de réglage.

2. Machine de thermoformage selon la revendication 1, dans laquelle lesdits moyens de verrouillage (51, 52, 53, 54) sont conçus pour adopter une pluralité de configurations de réglage, dans chacune desquelles ils détachent alternativement un élément mobile individuel (11 ; 12 ; 13 ; 14) de la pluralité des autres éléments mobiles attachés (12, 13, 14 ; 13, 14, 11; 14, 11, 12 ; 11, 12, 13), et dans laquelle ledit un élément mobile individuel (11 ; 12 ; 13 ; 14) peut être déplacé pour ajuster les dimensions d'un côté correspondant de la fenêtre (W).

3. Machine de thermoformage selon la revendication 1 ou 2, dans laquelle lesdits moyens de verrouillage (51, 52, 53, 54) sont conçus pour adopter en outre une configuration verrouillée, dans laquelle chaque élément mobile (11, 12, 13, 14) est attaché à l'élément mobile adjacent suivant respectif (12, 13, 14, 11) de manière à empêcher une variation non souhaitée des dimensions de la fenêtre (W).

4. Machine de thermoformage selon la revendication 3, dans laquelle lesdits moyens de verrouillage électromagnétiques comprennent quatre dispositifs de verrouillage électromagnétiques (51, 52, 53, 54) montés sur les éléments mobiles (11, 12, 13, 14) et conçus pour attacher chacun des éléments mobiles respectifs (11, 12, 13, 14) à l'élément mobile suivant (12, 13, 14, 11) par magnétisation.

5. Machine de thermoformage selon la revendication 4, dans laquelle chaque dispositif de verrouillage électromagnétique (51, 52, 53, 54) est conçu pour être inactif lorsqu'il laisse circuler un courant électrique, en libérant l'élément mobile associé (11, 12, 13, 14) de l'élément mobile suivant (12, 13, 14, 11).

6. Machine de thermoformage selon la revendication 4, dans laquelle chaque dispositif de verrouillage électromagnétique (51, 52, 53, 54) est conçu pour être actif lorsqu'il laisse circuler un courant électrique, en attachant l'élément mobile associé (11, 12, 13, 14) à l'élément mobile suivant (12, 13, 14, 11).

7. Machine de thermoformage selon l'une quelconque des revendications précédentes, dans laquelle lesdits moyens de verrouillage (51, 52, 53, 54) sont conçus pour adopter une première configuration de réglage dans laquelle ils attachent :
- le premier élément mobile précédent (11) au deuxième élément mobile suivant (12), en formant une première unité (100) ; et
- le troisième élément mobile précédent (13) au quatrième élément mobile suivant (14), en formant une deuxième unité (200) ;
ladite première configuration de réglage définissant une première direction de réglage (X-X) dans laquelle lesdites première et deuxième unités (100, 200) sont mobiles l'une par rapport à l'autre, ajustant de ce fait une première dimension (x) de la fenêtre (W).

8. Machine de thermoformage selon la revendication 7, dans laquelle lesdits moyens de verrouillage (51, 52, 53, 54) sont conçus pour adopter une deuxième configuration de réglage dans laquelle ils attachent :
- le quatrième élément mobile précédent (14) au premier élément mobile suivant (11), en formant une troisième unité (300) ; et
- le deuxième élément mobile précédent (12) au troisième élément mobile (13), en formant une quatrième unité (400) ;
ladite deuxième configuration de réglage définissant une deuxième direction de réglage (Y-Y) dans laquelle lesdites troisième et quatrième unités (300, 400) sont mobiles l'une par rapport à l'autre, ajustant de ce fait une deuxième dimension (y) de la fenêtre (W).

9. Machine de thermoformage selon la revendication 8, dans laquelle la première direction de réglage (x) est orthogonale à la deuxième direction de réglage (y).

10. Machine de thermoformage selon l'une quelconque des revendications précédentes, dans laquelle chaque élément mobile (11, 12, 13, 14) comprend :
- une partie de bord transversale (31, 32, 33, 34) au niveau de laquelle l'élément mobile respectif (11, 12, 13, 14) est conçu pour être à la fois adjacent et attaché à l'élément mobile suivant (12, 13, 14, 11) ; et
- une partie de bord longitudinale (41, 42, 43, 44) à travers laquelle la partie de bord transversale (31, 32, 33, 34) de l'élément mobile précédent (14, 11, 12, 13) est conçue pour être adjacente et attachée, les parties de bord longitudinales (41, 42, 43, 44) définissant la fenêtre (W).

11. Machine de thermoformage selon la revendication 10, dans laquelle les dispositifs électromagnétiques (51, 52, 53, 54) sont situés au niveau des parties de bord transversales (31, 32, 33, 34) des éléments mobiles respectifs (11, 12, 13, 14).

12. Machine de thermoformage selon la revendication 11, dans laquelle les parties de bord longitudinales (41, 42, 43, 44) sont faites d'un matériau ferromagnétique qui peut être magnétisé par les dispositifs de verrouillage électromagnétiques (51, 52, 53, 54).

13. Machine de thermoformage selon l'une quelconque des revendications précédentes, comprenant en outre des moyens de guidage (62, 73 ; 222, 224) appropriés pour permettre le glissement guidé des éléments mobiles (11, 12, 13, 14).

14. Machine de thermoformage selon l'une quelconque des revendications précédentes, comprenant en outre des moyens d'entraînement (200, 202, 210, 212, 226, 228, 230, 232, 234) pour déplacer les éléments mobiles (11, 12, 13, 14) par rapport à la boîte de thermoformage (B).
